# EUROPÄISCHE PATENTSCHRIFT

(11) **EP 1 703 181 B1**
(45) Veröffentlichungstag und Bekanntmachung des Hinweises auf die Patenterteilung: **11.03.2009**
(21) Anmeldenummer: 05011814.0
(22) Anmeldetag: 01.06.2005
(51) Int. Cl.: F16J 15/16

(54) **Dichtung**
Sealing
Joint d'étanchéité

(30) Priorität: 19.03.2005 DE 102005012800
(43) Veröffentlichungstag der Anmeldung: 20.09.2006
(73) Patentinhaber: Carl Freudenberg KG, 69469 Weinheim (DE)
(72) Erfinder: Freitag, Edgar, 34613 Schwalmstadt (DE); Jäckel, Jürgen, 34637 Schrecksbach (DE); Knapp, Werner, 34628 Willingshausen (DE); Braun, Otmar, 34621 Frielendorf (DE); Dabisch, Thomas, 34628 Willingshausen/Loshausen (DE); Hieber, Jürgen, 34613 Schwalmstadt (DE)

(56) Entgegenhaltungen:
- EP-A- 1 087 157
- GB-A- 1 142 265
- GB-A- 2 028 439
- US-A- 3 918 726
- US-A- 4 630 833
- US-A1- 2005 098 963

## Beschreibung

### Technisches Gebiet

Die Erfindung betrifft eine Dichtung, umfassend zumindest einen Dichtabschnitt und zumindest einen Stützabschnitt die aus voneinander abweichenden Werkstoffen gebildet sind sowie ein Verfahren zu dessen Herstellung.

### Stand der Technik

Derartige Dichtungen sind aus der US 5,032,335 bekannt. Die vorbekannte Dichtung weist einen Tragkörper auf, an dem eine Dichtscheibe angeordnet ist, die aus zwei stoffschlüssig miteinander verbundenen PTFE-Compounds gebildet ist. Zur Herstellung der Dichtscheibe werden Scheiben aus einem rohrförmigen PTFE-Halbzeug abgestochen. Die Herstellung des Halbzeugs erfolgt durch Pressen und Sintern zunächst einzelner Röhren aus verschiedenen pulverförmigen PTFE-Compounds. Diese Röhren werden in einem nächsten Schritt ineinander angeordnet und anschließend gemeinsam verpresst und gesintert. Dabei ist nachteilig, dass die Herstellung der Dichtung eine Vielzahl von Verfahrensschritten erfordert.

### Darstellung der Erfindung

Der Erfindung liegt die Aufgabe zugrunde, eine Dichtung bereitzustellen, deren Funktionsbereiche einen auf den Anwendungsfall angepassten Werkstoff aufweisen, wobei die Dichtung einfach und kostengünstig herstellbar ist

Diese Aufgabe wird mit den Merkmalen von Anspruch 1 und 11 gelöst. Auf vorteilhafte Ausgestaltungen nehmen die Unteransprüche Bezug.

Zur Lösung der Aufgabe umfasst die Dichtung zumindest einen Dichtabschnitt aus einem ersten zum Spritzguss geeigneten Werkstoff und zumindest einen Stützabschnitt aus einem zweiten zum Spritzguss geeigneten Werkstoff die entlang einer Bindefläche stoffschlüssig miteinander verbunden sind, wobei der Dichtabschnitt und der Stützabschnitt aus voneinander abweichenden Werkstoffen gebildet sind, wobei die Bindefläche von den Werkstoffen von Dichtabschnitt und Stützabschnitt zumindest teilweise durchdrungen ist. Die Dichtung kann dabei im Spritzguss-Verfahren gefertigt sein. Zur Herstellung der Dichtung sind nur wenig Verfahrensschritte erforderlich und es wird ein hoher Automatisierungsgrad erreicht. Jeder der Abschnitte kann mit einem für seinen Anwendungsfall optimierten Werkstoff ausgerüstet sein, wobei die Werkstoffe durch die stoffschlüssige Verbindung fest miteinander verbunden sind. Durch die Durchdringung der Bindefläche durch die Werkstoffe der Abschnitte sind dazu keine Bindemittel wie beispielsweise Klebstoffe erforderlich. Die Dichtung ist besonders bei innen- und/oder außendichtenden Hydraulikdichtungen oder Pneumatikdichtungen vorteilhaft.

Die Bindefläche kann im Querschnitt betrachtet, zumindest teilweise gegen die Orthogonale der Symmetrieachse geneigt ausgebildet sein. Dabei ist die Bindefläche in Teilabschnitten geneigt ausgebildet. Auftretende Scherspannungen durch auf die Dichtung einwirkende Drücke, die insbesondere bei der Verwendung der Dichtung als Kolben- und/oder Stangendichtung auftreten, werden durch die Ausgestaltung der Dichtung gemindert.

Die Bindefläche kann im Querschnitt betrachtet, gegen die Symmetrieachse geneigt ausgebildet sein. Bei dieser Ausgestaltung ist die Bindefläche über die gesamte Länge geneigt ausgebildet.

Die Bindefläche kann im Querschnitt betrachtet, wellenförmig ausgebildet sein. Die Spitzen und Täler können dabei zickzackförmig oder verrundet ausgeführt sein. Durch diese Ausgestaltung ergibt sich neben dem Stoffschluss zusätzlich ein Formschluss von Dichtabschnitt und Stützabschnitt.

Der Dichtabschnitt kann in einer vom Stützabschnitt ausgebildeten Nut aufgenommen sein. Bei dieser Ausgestaltung ergibt sich ebenfalls ergänzend zum Stoffschluss zwischen Dichtabschnitt und Stützabschnitt ein Formschluss.

Der erste Werkstoff kann eine geringere Härte aufweisen als der zweite Werkstoff. Dadurch ergibt sich durch den weicheren ersten Werkstoff, der mit einem relativ zu diesem bewegten abzudichtenden Maschinenelement in Berührung kommt, eine höhere Dichtheit des Maschinenelements und der Dichtung. Durch den härteren zweite Werkstoff erhöht sich die Stabilität des Stützabschnittes.

Der erste Werkstoff kann elastischer sein als der zweite Werkstoff. Dadurch ergibt sich eine Dichtung mit einem flexiblen Dichtabschnitt und einen steiferen Stützabschnitt. Dadurch kann die Dichtung derart gestaltet werden, dass der Dichtabschnitt auch bei exzentrischen Bewegungen immer an dem abzudichtenden Maschinenelement anliegt, während der Stützabschnitt härter ausgebildet ist die Dichtung versteift.

Dass der erste Werkstoff kann eine höhere Tieftemperaturelastizität aufweisen als der zweite Werkstoff. Dadurch kann die Dichtung derart gestaltet sein, dass der Dichtabschnitt auch bei tieferen Temperaturen zuverlässig abdichtet. Eine größere Flexibilität des Stützabschnittes ist dabei nicht erforderlich.

Der erste und der zweite Werkstoff können aus unterschiedlichen thermoplastischen Elastomeren gebildet sein. Die Formgebung von thermoplastischen Elastomeren kann im Spritzgussverfahren erfolgen.

Der erste und der zweite Werkstoff können aus unterschiedlichen thermoplastischen Polyurethanen gebildet sein. Thermoplastische Polyurethane sind kostengünstig und weisen gute Abriebfestigkeiten und gute Reibungswerte auf.

Die Aufgabe wird auch durch ein Verfahren zur Herstellung einer Dichtung gelöst bei dem in einem ersten Schritt ein erster polymerer Werkstoff mittels Spritzguss in ein Formwerkzeug eingebracht wird und in einem zweiten Schritt ein zweiter Werkstoff mittels Spritzguss in das Formwerkzeug eingebracht wird. Zur Herstellung der Dichtung ist dabei nur ein Formgebungswerkzeug erforderlich. Die Fertigung kann kontinuierlich erfolgen, da der erste Werkstoff im Formwerkzeug verbleibt und der zweite Werkstoff auf den ersten Werkstoff aufgespritzt wird. Dem Formwerkzeug wird abschließend die komplett hergestellte Dichtung entnommen. Die Abschnitte sind stoffschlüssig miteinander verbunden, wobei sich die Werkstoffe teilweise gegenseitig durchdringen. Die Durchdringung erfolgt drucklos durch lokales Aufschmelzen im Bereich der Bindeflächen beispielsweise durch den Spritzgussprozess oder durch Reibschweißen. Für die Verbindung von Dichtabschnitt und Stützabschnitt sind keine Bindemittel erforderlich.

Der erste Werkstoff kann einen niedrigeren Schmelzpunkt aufweisen als der zweite Werkstoff. Dadurch wird beim Einspritzen des zweiten Werkstoffes in das Formwerkzeug der erste Werkstoff oberflächlich aufgeschmolzen. Dabei durchdringen sich die Werkstoffe und es ergibt sich eine stoffschlüssige Verbindung. Der Einsatz von Bindemitteln ist dabei nicht erforderlich. Die Durchdringung der Werkstoffe erfolgt im gleichen Verfahrensschritt wie das Einspritzen des zweiten Werkstoffen, wodurch sich die Herstellung der Dichtung vereinfacht.

### Kurzbeschreibung der Zeichnung

Einige Ausführungsbeispiele der erfindungsgemäßen Dichtung werden nachfolgend anhand der Figuren näher erläutert. Diese zeigen, jeweils schematisch:
- Fig. 1: eine Dichtung mit einer in den Stützkörper eingebrachten Nut;
- Fig. 2: eine Dichtung mit einer gegen die Orthogonale der Symmetrieachse geneigten Bindefläche;
- Fig. 3: eine erfindungsgemäße Dichtung;
- Fig. 4: eine Dichtung mit einer wellenförmigen Dichtung;
- Fig. 5: eine Dichtung mit einem Stützabschnitt im Bereich der statischen Dichtung;
- Fig. 6: eine Dichtung mit einem außenumfangsseitig verlaufenden Stützabschnitt;
- Fig. 7: eine Dichtung mit einem außenumfangsseitig verlaufenden Stützabschnitt;
- Fig. 8: eine zweiseitig wirkende Dichtung;
- Fig. 9: eine zweiseitig wirkende Dichtung.

### Ausführung der Erfindung

Die Figuren zeigen eine Dichtung 1 mit einen Dichtabschnitt 2 der innenumfangsseitig eine dynamisch Dichtlippe 9 und außenumfangsseitig eine statische Dichtlippe 10 zugeordnet ist. Die Dichtung 1 ist damit außendichtend ausgebildet und findet vorzugsweise als Kolbendichtung in der Fluidtechnik (Hydraulik/Pneumatik) ihre Verwendung siehe auch GB-A-1 142 265. In anderen Ausgestaltungen kann die statische Dichtlippe 10 innenumfangsseitig und die dynamische Dichtlippe außenumfangsseitig angeordnet sein. Derartige Dichtungen sind innendichtend ausgebildet und finden vorzugsweise als Stangendichtung in der Fluidtechnik (Hydraulik/Pneumatik) ihre Verwendung. Der Dichtabschnitt 2 ist aus einem ersten zum Spritzguss geeigneten Werkstoff 3 gebildet. In dieser Ausführung besteht der erste Werkstoff 3 aus einem thermoplastischen Polyurethan, beispielsweise auf der Basis von MDI, TDI, TODI oder HDI. Der Dichtabschnitt 2 ist entlang einer Bindefläche 6 mit einem Stützabschnitt 4 stoffschlüssig verbunden. Der Stützabschnitt 4 ist aus einem zweiten zum Spritzguss geeigneten Werkstoff 5 gebildet. In dieser Ausführung besteht der zweite Werkstoff 5 aus einem härteren thermoplastischen Polyurethan. Die Bindeabschnitt 6 ist von den Werkstoffen 3, 5 von Dichtabschnitt 2 und Stützabschnitt 4 durchdrungen und bilden dadurch eine stoffschlüssige Verbindung. Der erste Werkstoff 3 weist in dieser Ausführung eine geringere Härte auf als der zweite Werkstoff 5 und ist elastischer ausgebildet. Des Weiteren weist der erste Werkstoff 3 in dieser Ausführung eine höhere Tieftemperaturelastizität auf als der zweite Werkstoff 5. In anderen Ausführungen können auch mehr als zwei Werkstoffe und mehr als zwei Funktionsbereiche ausgeführt sein.

Zur Herstellung der Dichtung 1 wird in einem ersten Schritt der erster Werkstoff 3 mittels Spritzguss in ein Formwerkzeug eingebracht wird und in einem zweiten Schritt der zweiter Werkstoff 5 mittels Spritzguss in das Formwerkzeug eingebracht. Dabei weist der erste Werkstoff 3 einen niedrigeren Schmelzpunkt auf als der zweite Werkstoff 5, was zu einem lokalen Aufschmelzen des ersten Werkstoffes 3 und damit zu einer stoffschlüssigen Verbindung führt.

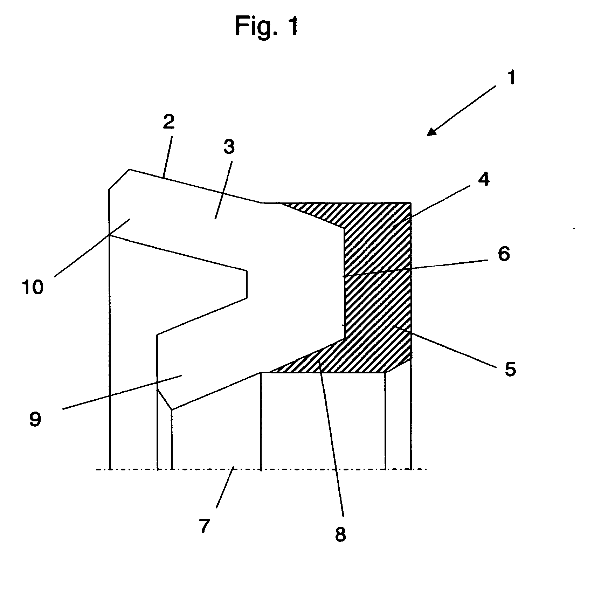

Figur 1 zeigt eine Dichtung 1 bei der der Dichtabschnitt 2 in einer vom Stützabschnitt 4 ausgebildeten Nut 8 aufgenommen ist.

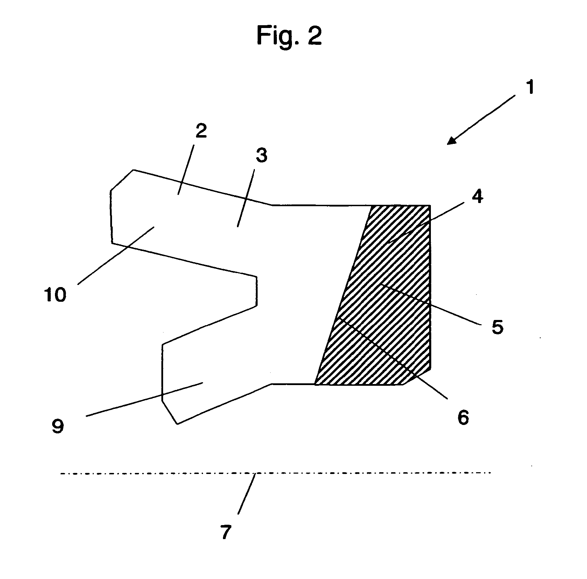

Figur 2 zeigt eine Dichtung 1 bei der die Bindefläche 6, im Querschnitt betrachtet, gegen die Orthogonale der Symmetrieachse 7 geneigt ausgebildet ist. Dabei ist die Neigung in dieser Ausführung, bei der die Dichtung 1 außendichtend ist, derart ausgelegt, dass der Stützabschnitt 4 entlang der Bindefläche 6 kegelförmig ausgebildet ist. Bei einer innendichtenden Dichtung 1 ist der Stützabschnitt entlang der Bindefläche 6 entsprechend trichterförmig ausgebildet.

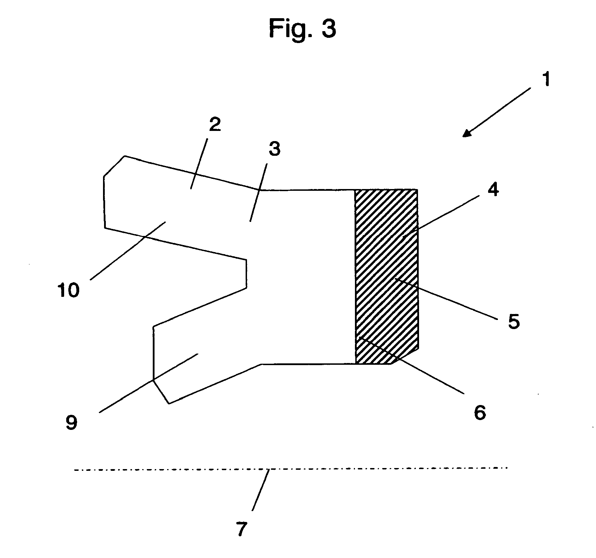

Figur 3 zeigt eine Dichtung 1 bei der die Bindefläche 6 orthogonal zur Symmetrieachse 7 ausgebildet ist.

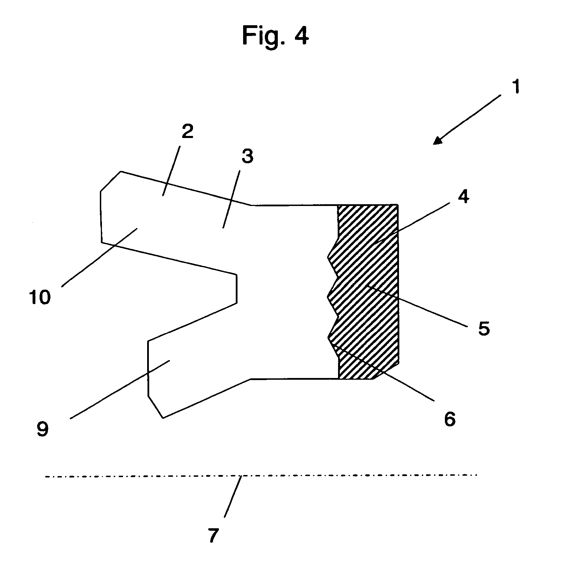

Figur 4 zeigt eine Dichtung 1 bei der die Bindefläche 6, im Querschnitt betrachtet, wellenförmig ausgebildet ist. Die Wellentäler und Wellenspitzen können dabei verrundet oder zackenförmig ausgebildet sein.

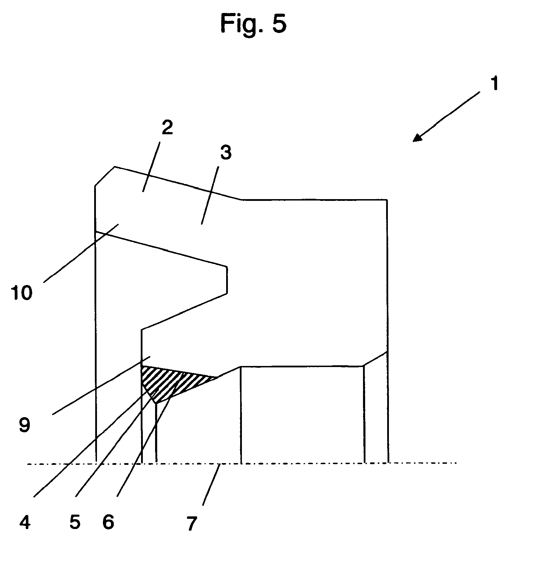

Figur 5 zeigt eine Dichtung 1 bei der der Stützabschnitt 4 als statische Dichtlippe 9 ausgebildet ist.

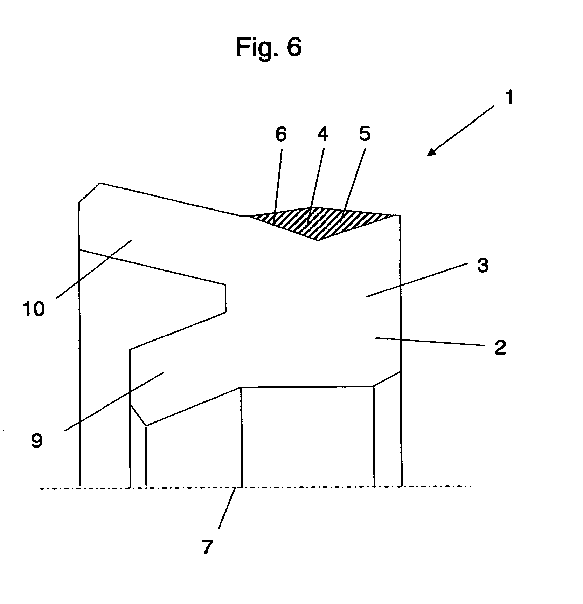

Figur 6 zeigt eine Dichtung 1 bei der der Stützabschnitt 4 außenumfangsseitig an dem Dichtabschnitt 2 angeordnet ist und diesen in einem Teilbereich umgibt.

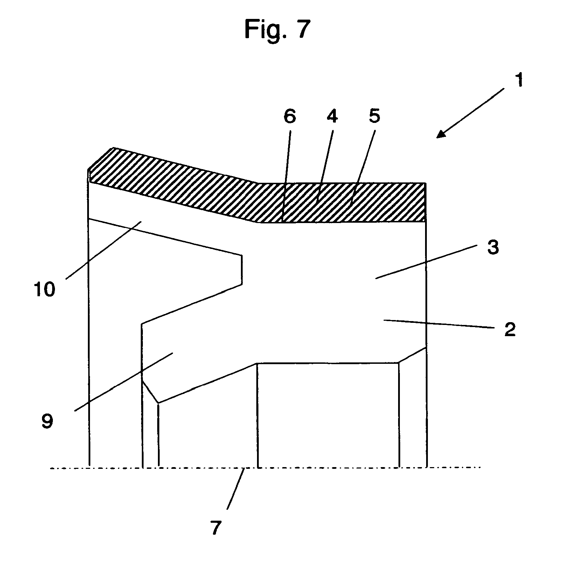

Figur 7 zeigt eine Dichtung 1 bei der der Stützabschnitt 4 außenumfangsseitig an dem Dichtabschnitt 2 angeordnet ist und diesen umfangsseitig vollständig umgibt.

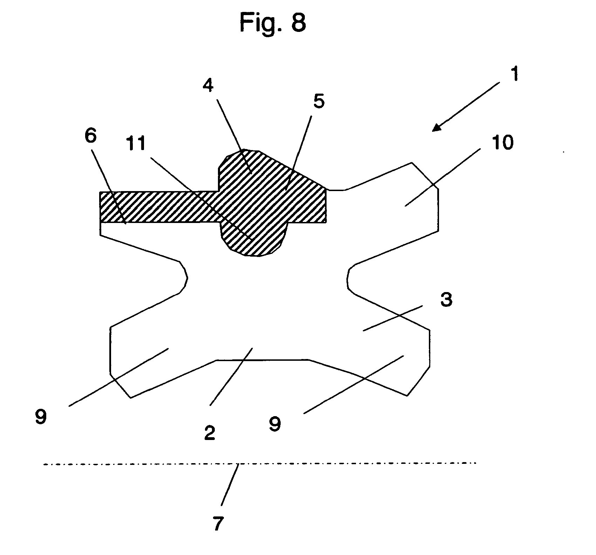

Figur 8 zeigt eine Dichtung 1 die insbesondere zur Abdichtung translatorisch bewegter Maschinenelemente geeignet ist und die in beiden Richtungen wirksam ist. Der Dichtabschnitt 2 ist außenumfangsseitig in einem Teilbereich von dem Stützabschnitt 4 umgeben. Der Dichtabschnitt weist zusätzlich außenumfangsseitig eine weitere Nut 11 auf, die den Stützabschnitt 4 aufnimmt.

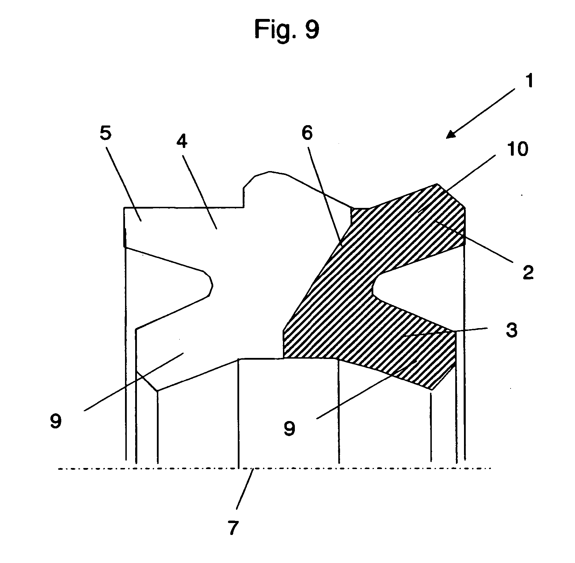

Figur 9 zeigt ebenfalls eine Dichtung 1 die insbesondere zur Abdichtung translatorisch bewegter Maschinenelemente geeignet ist und die in beiden Richtungen wirksam ist. Die Bindefläche 6 ist in dieser Ausführung teilweise gegen die Orthogonale der Symmetrieachse 7 geneigt ausgeführt.

## Patentansprüche

1. Kolben- oder Stangendichtung (1), umfassend zumindest einen Dichtabschnitt (2) der eine dynamische Dichtlippe (9) und eine statische Dichtlippe (10) zugeordnet ist und die aus einem ersten zum Spritzguss geeigneten Werkstoff (3) besteht sowie zumindest einen Stützabschnitt (4) aus einem zweiten zum Spritzguss geeigneten Werkstoff (5)
wobei der Dichtabschnitt (2) und der Stützabschnitt (4) aus voneinander abweichenden Werkstoffen (3, 5) gebildet sind **dadurch gekennzeichnet daß** die Abschnitte (2, 4) entlang einer Bindefläche (6) stoffschlüssig miteinander verbunden sind, wobei die Bindefläche (6) von den Werkstoffen (3, 5) von Dichtabschnitt (2) und Stützabschnitt (4) zumindest teilweise durchdrungen ist.

2. Dichtung nach Anspruch 1, **dadurch gekennzeichnet, dass** die Bindefläche (6), im Querschnitt betrachtet, zumindest teilweise gegen die Orthogonale der Symmetrieachse (7) geneigt ausgebildet ist.

3. Dichtung nach Anspruch 1 oder 2, **dadurch gekennzeichnet, dass** die Bindefläche (6), im Querschnitt betrachtet, gegen die Orthogonale der Symmetrieachse (7) geneigt ausgebildet ist.

4. Dichtung nach einem der Ansprüche 1 bis 3, **dadurch gekennzeichnet, dass** die Bindefläche (6), im Querschnitt betrachtet, wellenförmig ausgebildet ist.

5. Dichtung nach einem der Ansprüche 1 bis 4, **dadurch gekennzeichnet, dass** der Dichtabschnitt (2) in einer vom Stützabschnitt (4) ausgebildeten Nut (8) aufgenommen ist.

6. Dichtung nach einem der Ansprüche 1 bis 5, **dadurch gekennzeichnet, dass** der erste Werkstoff (3) eine geringere Härte aufweist als der zweite Werkstoff (5).

7. Dichtung nach einem der Ansprüche 1 bis 6, **dadurch gekennzeichnet, dass** der erste Werkstoff (3) elastischer ist als der zweite Werkstoff (5).

8. Dichtung nach einem der Ansprüche 1 bis 7, **dadurch gekennzeichnet, dass** der erste Werkstoff (3) eine höhere Tieftemperaturelastizität aufweist als der zweite Werkstoff (5).

9. Dichtung nach einem der Ansprüche 1 bis 8, **dadurch gekennzeichnet, dass** der erste und der zweite Werkstoff (3, 5) aus unterschiedlichen thermoplastischen Elastomeren gebildet sind.

10. Dichtung nach Anspruch 9, **dadurch gekennzeichnet, dass** der erste und der zweite Werkstoff (3, 5) aus unterschiedlichen thermoplastischen Polyurethanen gebildet sind.

11. Verfahren zur Herstellung einer Dichtung (1) nach einem der vorherigen Ansprüche bei dem in einem ersten Schritt ein erster Werkstoff (3) mittels Spritzguss in ein Formwerkzeug eingebracht wird und in einem zweiten Schritt ein zweiter Werkstoff (5) mittels Spritzguss in das Formwerkzeug eingebracht wird.

12. Verfahren nach Anspruch 11, **dadurch gekennzeichnet, dass** der erste Werkstoff (3) einen niedrigeren Schmelzpunkt aufweist als der zweite Werkstoff (5).

## Claims

1. Piston or rod seal (1), comprising at least one sealing section (2), the seal being assigned a dynamic sealing lip (9) and a static sealing lip (10) and being composed of a first material (3) suitable for injection moulding, the seal also comprising at least one supporting section (4) made of a second material (5) suitable for injection moulding, wherein the sealing section (2) and the supporting section (4) are formed from different materials (3, 5), **characterized in that** the sections (2, 4) are connected to each other along a binding surface (6) with a cohesive material joint, with the binding surface (6) being at least partially penetrated by the materials (3, 5) of the sealing section (2) and supporting section (4).

2. Seal according to Claim 1, **characterized in that** the binding surface (6), as viewed in cross section, is designed such that it is at least partially inclined towards the orthogonal of the axis of symmetry (7).

3. Seal according to Claim 1 or 2, **characterized in that** the binding surface (6), as viewed in cross section, is designed such that it is inclined towards the orthogonal of the axis of symmetry (7).

4. Seal according to one of Claims 1 to 3,
**characterized in that** the binding surface (6), as viewed in cross section, is of corrugated design.

5. Seal according to one of Claims 1 to 4, **characterized in that** the sealing section (2) is accommodated in a groove (8) formed by the supporting section (4).

6. Seal according to one of Claims 1 to 5, **characterized in that** the first material (3) is less hard than the second material (5).

7. Seal according to one of Claims 1 to 6, **characterized in that** the first material (3) is more elastic than the second material (5).

8. Seal according to one of Claims 1 to 7, **characterized in that** the first material (3) has a higher low-temperature elasticity than the second material (5).

9. Seal according to one of Claims 1 to 8, **characterized in that** the first and the second material (3, 5) are formed from different thermoplastic elastomers.

10. Seal according to Claim 9, **characterized in that** the first and the second material (3, 5) are formed from different thermoplastic polyurethanes.

11. Method for producing a seal (1) according to one of the preceding claims, in which, in a first step, a first material (3) is placed into a die by means of injection moulding and, in a second step, a second material (5) is placed into the die by means of injection moulding.

12. Method according to Claim 11, **characterized in that** the first material (3) has a lower melting point than the second material (5).

## Revendications

1. Garniture d'étanchéité de piston ou de tige (1), comprenant au moins une portion d'étanchéité (2) à laquelle sont associées une lèvre d'étanchéité dynamique (9) et une lèvre d'étanchéité statique (10), et qui se compose d'un premier matériau (3) approprié au moulage par injection, et au moins une portion de support (4) constituée d'un deuxième matériau (5) approprié au moulage par injection, la portion d'étanchéité (2) et la portion de support (4) se composant de matériaux (3, 5) différents l'un de l'autre, **caractérisée en ce que** les portions (2, 4) sont connectées l'une à l'autre par liaison de matière le long d'une surface de liaison (6), la surface de liaison (6) étant au moins en partie traversée par les matériaux (3, 5) de la portion d'étanchéité (2) et de la portion de support (4).

2. Garniture d'étanchéité selon la revendication 1, **caractérisée en ce que** la surface de liaison (6) considérée en section transversale, est réalisée au moins en partie de manière inclinée par rapport à la perpendiculaire à l'axe de symétrie (7).

3. Garniture d'étanchéité selon la revendication 1 ou 2, **caractérisée en ce que** la surface de liaison (6), considérée en section transversale, est réalisée de manière inclinée par rapport à la perpendiculaire à l'axe de symétrie (7).

4. Garniture d'étanchéité selon l'une quelconque des revendications 1 à 3, **caractérisée en ce que** la surface de liaison (6), considérée en section transversale, est réalisée sous forme ondulée.

5. Garniture d'étanchéité selon l'une quelconque des revendications 1 à 4, **caractérisée en ce que** la portion d'étanchéité (2) est reçue dans une rainure (8) réalisée par la portion de support (4).

6. Garniture d'étanchéité selon l'une quelconque des revendications 1 à 5, **caractérisée en ce que** le premier matériau (3) présente une dureté plus faible que le deuxième matériau (5).

7. Garniture d'étanchéité selon l'une quelconque des revendications 1 à 6, **caractérisée en ce que** le premier matériau (3) est plus élastique que le deuxième matériau (5).

8. Garniture d'étanchéité selon l'une quelconque des revendications 1 à 7, **caractérisée en ce que** le premier matériau (3) présente une plus grande élasticité à basse température que le deuxième matériau (5).

9. Garniture d'étanchéité selon l'une quelconque des revendications 1 à 8, **caractérisée en ce que** le premier et le deuxième matériau (3, 5) sont formés d'élastomères thermoplastiques différents.

10. Garniture d'étanchéité selon la revendication 9, **caractérisée en ce que** le premier et le deuxième matériau (3, 5) sont formés de polyuréthannes thermoplastiques différents.

11. Procédé de fabrication d'une garniture d'étanchéité (1) selon l'une quelconque des revendications précédentes, dans lequel, dans une première étape, un premier matériau (3) est introduit au moyen d'un moulage par injection dans un outil de moulage et dans une deuxième étape, un deuxième matériau (5) est introduit au moyen d'un moulage par injection dans l'outil de moulage.

12. Procédé selon la revendication 11, **caractérisé en ce que** le premier matériau (3) présente un plus bas point de fusion que le deuxième matériau (5).
